# EUROPEAN PATENT APPLICATION

(11) **EP 4 810 204 A1**
(43) Date of publication of application: **23.09.2026**
(21) Application number: 25164155.1
(22) Date of filing: 17.03.2025
(51) Int. Cl.: B25J 9/16, G05B 17/02

(54) **SIMULATING AN ADAPTED MOTION OF AN INDUSTRIAL ROBOT INSERTING A PCB COMPONENT**

(71) Applicant: Siemens Industry Software Ltd., 7019900 Tel Aviv (IL)
(72) Inventor: Hazan, Moshe, 4083918 Elad (IL)
(74) Representative: Siemens Patent Attorneys

(57) **Abstract**

System and method for simulating a motion of a robot inserting a board component into a hole of a PCB board while utilizing a Force Torque sensor. The system receives data on a virtual representation of a robot's gripper, of a PCB component, of a PCB board, of a board hole and of a Force Torque sensor, on a robotic target insertion task about an insertion of the component held by the robot's gripper into the hole described by a nominal hole target location. The robotic component insertion task is simulated. Data on an encounter event between the component and the board surface are applied into a FT-sensor predictor configured for outputting FT-sensor outcome data. A condition requiring a corresponding adaptation of the robot's insertion motion is identified. The robot's adapted insertion motion is simulated.

## Description

### TECHNICAL FIELD

The present disclosure is directed, in general, to computer-aided design, visualization, and manufacturing ("CAD") systems, product lifecycle management ("PLM") systems, product data management ("PDM") systems, and similar systems, that manage data for products and other items (collectively, "Product Data Management" systems or PDM systems). More specifically, the disclosure is directed to production environment simulation. More specifically, the disclosure is directed to production environment simulation. The present disclosure is also directed to the control and/or command of a robot based on a robotic simulation result.

### BACKGROUND OF THE DISCLOSURE

In some industrial scenarios, to validate robotic operations at the shopfloor, manufacturing companies make use of different virtual robotic simulation systems including, but not limited to, Computer Assisted Robotic ("CAR") tools, Process Simulate (a product of Siemens PLM software suite), robotic simulation software tools, and other virtual systems for simulation of industrial robots, herein simply called robotic simulation tools or simulations.

Industrial users make use of such robotic simulations to simulate the kinematic motion behavior of industrial robots in robotic cells at the shop floor for example for validation and collision avoidance purposes. Typically, users utilize such robotic simulation tools to create, edit, validate, and simulate robotic programs of the robots. Once validated, the robotic program of the virtual robot can advantageously be downloaded and used by the real robot to perform its robotic tasks at the real shopfloor.

In industrial robotics, force and torque ("FT") sensors play a crucial role in modern robotic applications because they provide essential feedback to industrial systems. For example, in certain industrial scenario, the FT sensors enable the controller to detect changes in the work process, allowing robots to adapt dynamically to the varying conditions.

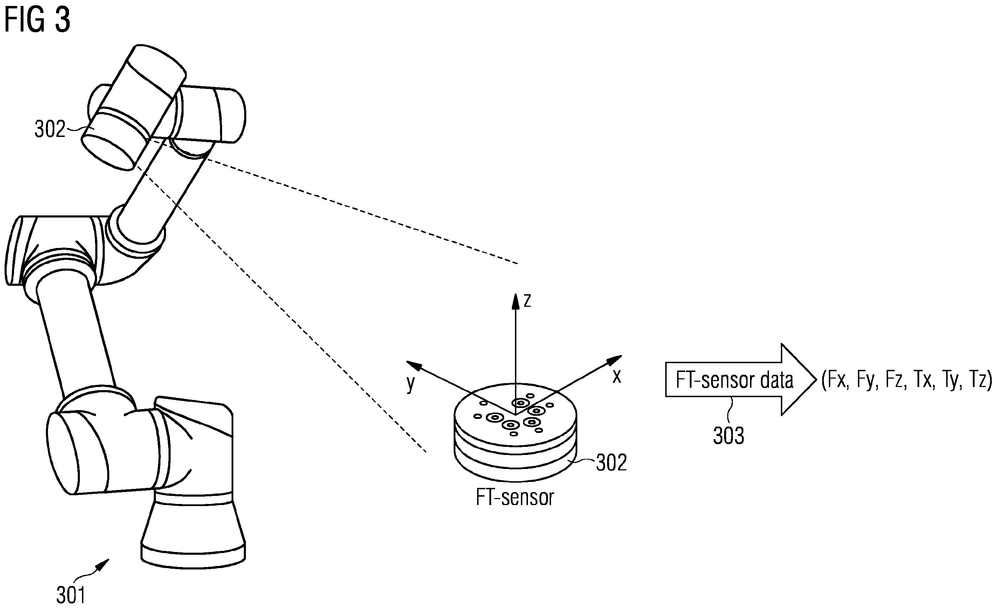

Figure 3 illustrates a schematic drawing of an example of force-torque sensor built-in in a robot. The robot 301 is equipped with built-in FT sensor 302 that measures the applied forces and torques during a robot's manufacturing operation. The output of a FT sensor is numerical data 303 related to the forces and torques applied along the x,y,z axes, measured in Newton and Newton-meter (Fx, Fy, Fz, Tx, Ty, Tz).

FT sensors are particularly valuable in industrial robot for printed circuit boards ("PCB") manufacturing.

In fact, during assembly processes the FT sensor control ensures that the robotic gripper can perform component assembly operations in precise manners without damaging the board or the components to be placed.

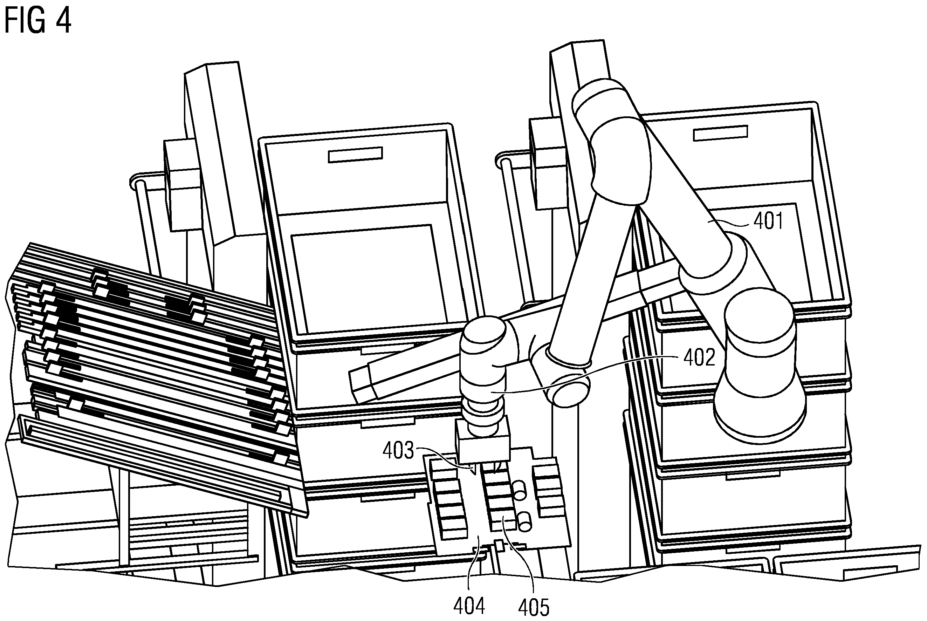

Figure 4 illustrates a schematic drawing of an assembly cell with a robot placing PCB components onto a PCB motherboard. In this view of the PCB manufacturing cell, the robot 401 equipped with a gripper 403 is shown placing PCB components 405 onto the PCB motherboard 404. The robot's FT sensor 402 helps performing this precision placement task by measuring the applied forces and torques during the robot's operation.

In general, by integrating force and torque sensing technology, robots can more closely mimic the movements and dexterity of human hands. This advancement allows robot to perform delicate tasks that previously required human intervention, such as handling fragile materials or executing intricate assembly steps. Instead, without such FT sensors, most manufacturing robots would rely on predefined parameters for speed and movement, which limits their ability to adapt to changing conditions.

Although modern physical industrial robot may often use external or embedded FT sensors, unfortunately, in the current art, there is no way to have an automatic and full integration of FT sensors in robotic simulations or Computer Aided Robotic ("CAR") tools.

In order to simulate and adapt the motion of industrial robots inserting PCB components into PCB holes, it is important that the measurement results of the FT sensors are taken into account as it is the case of the real adapted robot's insertion motion at the shopfloor.

Therefore, improved techniques to simulate an adapted robot's motion of a PCB component insertion are desirable.

### SUMMARY OF THE DISCLOSURE

Various disclosed embodiments include methods, systems, and computer readable mediums for simulating motion of a robot inserting a board component into a hole of a PCB board while utilizing a FT sensor. A method includes receiving data on a virtual representation of a robot's gripper, of a PCB component, of a PCB board, of a board hole and of a FT sensor, hereafter FT-sensor. The method further includes receiving data on a robotic target insertion task about an insertion of the component held by the robot's gripper into the hole described by a nominal hole target location to be reached by the robotic gripper's location. The method further includes simulating the robotic component insertion whereby at least one real hole target location differs from the nominal hole target location; further including receiving input data on an encounter event between the component and the board surface; wherein said encounter event data comprise at least position and speed data between the component and the surface. The method further includes applying to the input data a FT-sensor predictor configured for generating as output data a set of predicted FT-sensor outcome data; wherein the FT-sensor predictor is a module trained by a ML algorithm with input training datasets comprising datasets of several encounter data between the component and the surface and with output training dataset comprising the corresponding real FT-sensor outcome data. Based on the predicted FT-sensor outcome data, the method further includes identifying a condition requiring a corresponding adaptation of the robot's insertion motion. The method further includes simulating the robot's adapted insertion motion.

A data processing system comprising a processor and an accessible memory or database is also disclosed, wherein the data processing system is configured to implement any of the described methods. Embodiments propose also a non-transitory computer-readable medium encoded with executable instructions that, when executed, cause one or more data processing systems to perform any of the described methods.

The foregoing has outlined rather broadly the features and technical advantages of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiment disclosed as a basis for modifying or designing other structures for carrying out the same purposes of the present disclosure. Those skilled in the art will also realize that such equivalent constructions do not depart from the spirit and scope of the disclosure in its broadest form.

Before undertaking the DETAILED DESCRIPTION below, it may be advantageous to set forth definitions of certain words or phrases used throughout this patent document: the terms "include" and "comprise," as well as derivatives thereof, mean inclusion without limitation; the term "or" is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely. Definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
Figure 1 illustrates a block diagram of a data processing system in which an embodiment can be implemented.
Figure 2 illustrates a flowchart for simulating an adapted motion of a robot inserting a PCB component in accordance with disclosed embodiments.
Figure 3 illustrates a schematic drawing of an example of force-torque sensor built-in in a robot.
Figure 4 illustrates a schematic drawing of an example of assembly cell with a robot placing PCB components.
Figure 5 illustrates a block diagram for simulating an adapted motion of an industrial robot inserting a PCB component in accordance with disclosed embodiments.
Figure 6 illustrates schematic drawings of exemplary insertion scenarios for a PCB component held by a robot's gripper in accordance with disclosed embodiments.

### DETAILED DESCRIPTION

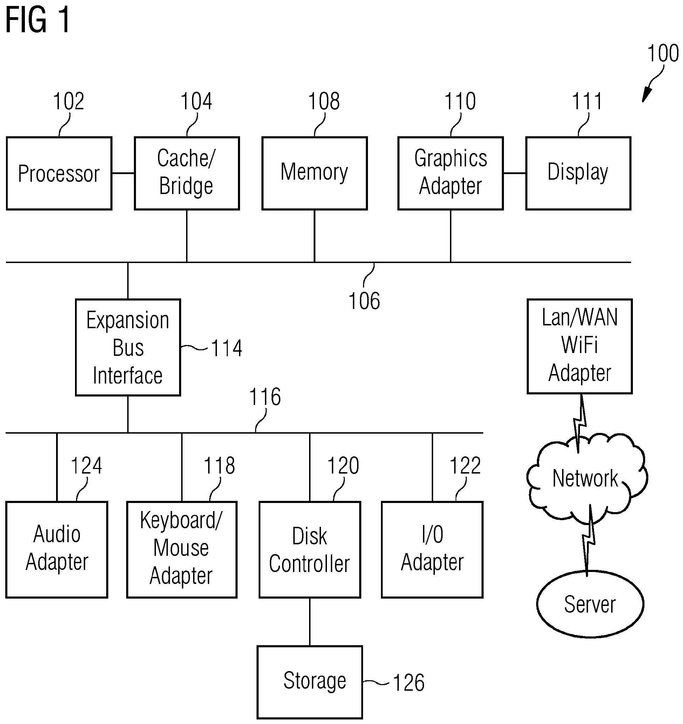

FIGURES 1 through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged device. The numerous innovative teachings of the present application will be described with reference to exemplary non-limiting embodiments.

Previous techniques Previous techniques for simulating an adapted robot's motion of a PCB component insertion have some drawbacks. The embodiments disclosed herein provide numerous technical benefits, including but not limited to the following examples.

Embodiments enable to predict and to integrate FT sensor in a robot's simulation of PCB assembly cells.

In fact, embodiments enable to use a ML-based solution for the prediction of force and torque sensor outcomes.

Embodiments enable to predict FT sensor outcomes and to take them into account by the simulation.

Embodiments enable robotic simulations to replicate the real-world behavior of physical robots in PCB assembly cells.

Embodiments enable to integrate FT sensors into robotic simulations, which was not possible in prior art digital twins, CAR tools and robotic simulations.

Embodiments enable to incorporate in a robotic simulation the FT sensor measurements as inputs to guide the robot in modifying its actions.

Embodiments enable to perform realistic simulations and validations of PCB assembly cells.

In fact, embodiments enable to create and run realistic simulations that reflect the real physical robot behavior as on the shop floor.

Embodiments enable to validate robotic programs and use cases at the digital twin, during simulation, before any production or before trying them on the shop floor.

Embodiments enable to simulate realistic robotic behaviors and production timelines which are adequately tested virtually, offline and not at the shopfloor.

Embodiments enable to connect the physical and virtual worlds, ensuring realistic simulation outcomes.

Embodiments enable to improve the productivity and the risk reduction of PCB assembly cells.

In fact, embodiments enable to increase productivity at a very early stage, in the virtual world, before the shop floor stage, by: simulating realistic cycle times, optimizing the robot program, validating offline realistic use cases.

Embodiments enable to validate PCB assembly processes before production, eliminating the need for robotic monitoring systems utilized at the shopfloor as for example Artimind LAR systems.

Embodiments enable to reduce risks significantly since the robotic program is already optimized and verified offline and not implemented in live environments without tests.

Embodiments enable to save time and money by automating processes and ensuring realistic simulation outcomes.

Embodiments enable to validate realistic use cases such as for example real hole locations of PCB boards and not just nominal hole locations as in prior art simulations. Embodiments enable to track the robotic hole searches and when needed to adapt the insertion task and/or the robotic program.

Embodiments may be used for robot validation purposes.

Figure 1 illustrates a block diagram of a data processing system 100 in which an embodiment can be implemented, for example as a PDM system particularly configured by software or otherwise to perform the processes as described herein, and in particular as each one of a plurality of interconnected and communicating systems as described herein. The data processing system 100 illustrated can include a processor 102 connected to a level two cache/bridge 104, which is connected in turn to a local system bus 106. Local system bus 106 may be, for example, a peripheral component interconnect (PCI) architecture bus. Also connected to local system bus in the illustrated example are a main memory 108 and a graphics adapter 110. The graphics adapter 110 may be connected to display 111.

Other peripherals, such as local area network (LAN) / Wide Area Network / Wireless (e.g. WiFi) adapter 112, may also be connected to local system bus 106. Expansion bus interface 114 connects local system bus 106 to input/output (I/O) bus 116. I/O bus 116 is connected to keyboard/mouse adapter 118, disk controller 120, and I/O adapter 122. Disk controller 120 can be connected to a storage 126, which can be any suitable machine usable or machine readable storage medium, including but are not limited to nonvolatile, hard-coded type mediums such as read only memories (ROMs) or erasable, electrically programmable read only memories (EEPROMs), magnetic tape storage, and user-recordable type mediums such as floppy disks, hard disk drives and compact disk read only memories (CD-ROMs) or digital versatile disks (DVDs), and other known optical, electrical, or magnetic storage devices.

Also connected to I/O bus 116 in the example shown is audio adapter 124, to which speakers (not shown) may be connected for playing sounds. Keyboard/mouse adapter 118 provides a connection for a pointing device (not shown), such as a mouse, trackball, trackpointer, touchscreen, etc.

Those of ordinary skill in the art will appreciate that the hardware illustrated in Figure 1 may vary for particular implementations. For example, other peripheral devices, such as an optical disk drive and the like, also may be used in addition or in place of the hardware illustrated. The illustrated example is provided for the purpose of explanation only and is not meant to imply architectural limitations with respect to the present disclosure.

A data processing system in accordance with an embodiment of the present disclosure can include an operating system employing a graphical user interface. The operating system permits multiple display windows to be presented in the graphical user interface simultaneously, with each display window providing an interface to a different application or to a different instance of the same application. A cursor in the graphical user interface may be manipulated by a user through the pointing device. The position of the cursor may be changed and/or an event, such as clicking a mouse button, generated to actuate a desired response.

One of various commercial operating systems, such as a version of Microsoft Windows^{™}, a product of Microsoft Corporation located in Redmond, Wash. may be employed if suitably modified. The operating system is modified or created in accordance with the present disclosure as described.

LAN/ WAN/Wireless adapter 112 can be connected to a network 130 (not a part of data processing system 100), which can be any public or private data processing system network or combination of networks, as known to those of skill in the art, including the Internet. Data processing system 100 can communicate over network 130 with server system 140, which is also not part of data processing system 100, but can be implemented, for example, as a separate data processing system 100.

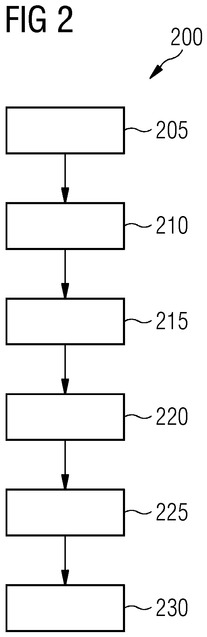

Figure 2 illustrates a flowchart 200 of a for simulating an adapted motion of a robot inserting a board component into a hole of a PCB board while utilizing a Force Torque sensor in accordance with disclosed embodiments. Such method can be performed, for example, by system 100 of Figure 1 described above, but the "system" in the process below can be any apparatus configured to perform a process as described. Of course, the "system" in the following description of the method according to embodiments can be any apparatus suitable for performing the described process.

At act 205, the system receives data on a virtual representation of a robot's gripper, data on a virtual representation of a PCB component, data on a virtual representation of a PCB board, data on a virtual representation of a board hole and data on a virtual representation of a FT sensor.

At act 210, the system receives data on a robotic target insertion task about an insertion of the component held by the robot's gripper into the hole described by a nominal hole target location to be reached by the robotic gripper's location. In embodiments, the data insertion task is part of a robotic program.

At act 215, the system receives data on a robotic target insertion task about an insertion of the component held by the robot's gripper into the hole described by a nominal hole target location to be reached by the robotic gripper's location. In embodiments, the insertion task data is part of a robotic program.

At act 220, the system simulates the insertion task whereby at least one real hole target location differs from the nominal hole target location. Act 220 further includes receiving input data on an encounter event between the component and the board surface; wherein the encounter event data comprise at least position and speed data between the component and the surface.

At act 225, the system applies to the input data a FT-sensor predictor configured for generating as output data a set of predicted FT-sensor outcome data; wherein the FT-sensor predictor is a module trained by a Machine Leaning algorithm with input training datasets comprising datasets of several encounter data between the component and the surface and with output training dataset comprising the corresponding real FT-sensor outcome data. In embodiments, the FT-sensor predictor is trained via a regression supervised learning algorithm.

At act 230, based on the predicted FT-sensor outcome data, the system identifies a condition requiring a corresponding adaptation of the robot's insertion motion.

At act 235, the system simulates the robot's adapted insertion motion.

In embodiments, the adaptation of the robot's insertion motion may be reflected in an adjusted robotic program for download.

In embodiments, a real robot motion is controlled or commanded according to the simulated insertion motion at act 235.

In embodiments, the adaptation of the robot's insertion motion is selected from one or more of the group consisting of: adaptation of the speed of the robot; adaption of the motion type of the robot; stopping pushing the component; continuing pushing the component; changing type of robot's search e.g. grid, spiral, contour search.

In embodiments, the robot's adapted insertion motion is simulated with different types of PCB boards having real hole locations deviating from the nominal hole locations.

### Algorithms of exemplary embodiments to generate training datasets and to provide the ML-module

Exemplary embodiments illustrate the main algorithm phases and steps to generate training datasets for training and providing a ML model of a FT-sensor predictor configured for outputting a set of predicted FT-sensor data. For this purpose, the data processing system 100 shown in Figure 1 might be further configured in accordance with embodiments.

The system In embodiments, in order to provide the FT-sensor predictor, the following five phases may be performed:
1. generating a robotic program;
2. physically executing the robotic program;
3. collecting the ML training datasets;
4. training the ML module;
5. exporting the ML trained module to provide the FT-sensor predictor.

In embodiments, the first phase of "generating a robotic program" may include the below examples. The system generates a robotic program, preferably in an automatic manner. The generated robotic program includes the following data: target locations (with and without motion parameters); multiple robotic end-effector encounters (at different angles, at different speeds etc).

In PCB assembly, the robotic end-effector encounters may include encounter event data between a specific component held by the robot's gripper or tool and a surface of a PCB motherboard where the component has to be placed.

In embodiments, the second phase of "physically executing the robotic program" may include the below examples the execution by the physical robot the robotic program with different grippers Gi and entities Ei or PCB components.

In embodiments, the third phase of "collecting the ML training datasets" may include the below examples.
- ML training input and input output datasets are generated.
- Each time the FT-sensor senses an encounter, collect the input and output data of this encounter event.
- Input data: Tool data (e.g. pose, model, mass etc), Entity data, Surface of PCB board (e.g. model, hardness value); Speed; angle with the surface; surface data (e.g. hardness)
- Output data: FT sensor outcome data for each encounter event
- At the end, the following list with training datasets is generated LIST < Input data, Output data >

The system populates the input training dataset with the collected input data and the output training dataset with the corresponding output data.

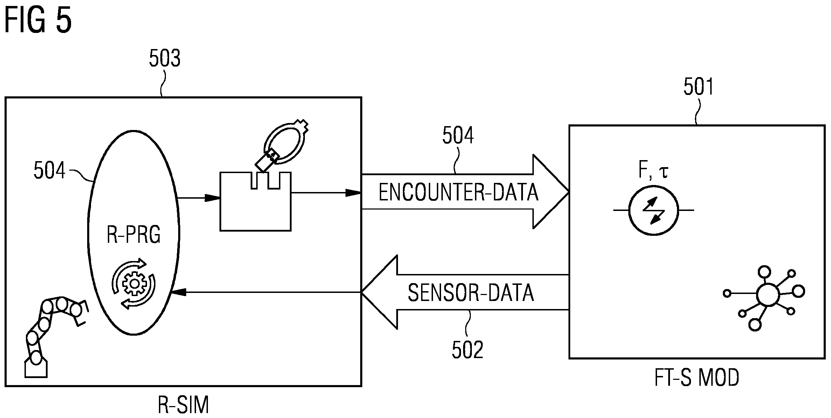

In embodiments, the input/output data are organized and described in manners that are suitable to define datasets both for ML training and ML module usage of the FT-sensor predictor 501 shown in Figure 5.

The training datasets are elaborated to extract a learned function with a Machine Learning ("ML") algorithm, preferably with a ML algorithm selected from the group of supervised learning algorithms. The learned function is such that it can map at its best the input datasets into the output datasets. The goal of the used ML algorithm is to approximate the mapping function so well that for a given input dataset, the corresponding FT-sensor outcome data can be predicted as output data for that given input data. Extracted learned function data are used to generate a trained robotic program ML module 501 for the specific combination.

In embodiments, the training datasets may conveniently be generated for different types of PCB assembly shopfloor scenarios for example different type of robots, of grippers, of FT-sensors, of PCB motherboards (e.g. surfaces and hole locations), of PCB components. Conveniently, multiple FT-sensor predictors 501 may be provided and used for each scenario combination.

In embodiments, different ML-trained modules are trained for different types of models of robots. In embodiments, the ML module 501 may be used as a stand-alone module, e.g. a cloud service to predict FT-sensor outcomes. In other embodiments, the ML module may be used as a stand-alone module by a virtual simulation tool. In other embodiments, the ML module may be embedded within a virtual simulation tool or in hybrid configurations e.g. standalone and/or embedded. In embodiments, a virtual robotic simulation tool simulates the adapted robotic motion behavior of one or more specific PCB assembly scenarios with a plurality of ML modules.

### Algorithms of exemplary embodiments to simulate a motion of a robot inserting a PCB component

In exemplary embodiments, the main algorithm phases and steps to simulate the robot's motion behavior whilst inserting a PCB component are illustrated with the help of Figure 5. Figure 5 illustrates a block diagram for simulating an adapted motion of an industrial robot inserting a PCB component in accordance with disclosed embodiments.

In embodiments, a robotic target insertion task of a robotic program involves inserting a PCB component, held by the robot's gripper, into a PCB hole defined by a target location. The gripper Tool Center Point Frame ("TCPF") has to reach this specified hole target location to complete the insertion of the component into the hole.

The system is provided the FT sensor predictor 501 that is a trained ML module configured to outputting FT-sensor data 502 when receiving input data 504 about specific encounter events.

In embodiments, a user (not shown) loads a virtual robotic study of a PCB robotic cell in a robotic simulation tool 503.

For the relevant PCB surfaces, the hardness values are set.

A robotic simulation is played.

At each time interval, check whether the PCB component held by the robot's gripper touches any PCB surface,
if yes, perform the following steps:
- send the current Input data 504 into the FT-sensor predictor 501 such as e.g. tool data, speed; angle with the surface; hardness of the surface;
- get back the outputted data 502 < Sensor's outcome for this event>.

Based on the FT-sensor outcome data, the virtual robot, the digital twin of the physical robot, identifies one or more conditions requiring adapting its insertion motion.

Advantageously, with embodiments, the virtual robot is enabled to perform in the virtual world the exact action of the physical robot as described in its robotic program. Examples of such adaptation actions include, but are not limited by, reducing speed upon approaching the location, stopping the motion, and pushing the component into the hole of the PCB board. In embodiments, the insertion action within the robotic program may be modified and a new, updated robotic program may subsequently be downloaded.

With embodiments, the validation of a robotic program may be done offline in the virtual world before a physical production activity.

Embodiments advantageously to reduce the gap between the physical and the virtual in PCB assembly manufacturing environments where industrial robots make use of FT-sensor technology.

Optionally, additional steps, some of which may be iterative, can be performed, such as:
- running a robot's simulation;
- detecting an encounter event when a PCB surface is contacted by a component at the robot' end effector;
- collecting relevant input data such as e.g. gripper info (pose data); speed; angle with the surface; surface hardness;
- applying the input data into a FT-sensor predictor to receive as output data the FT sensor's outcome data for this event;
- based on the FT sensor's outcome, selecting the adapted action as described in the robotic program
- going back to the initial step of running the simulation.

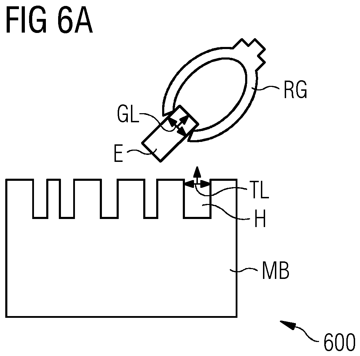

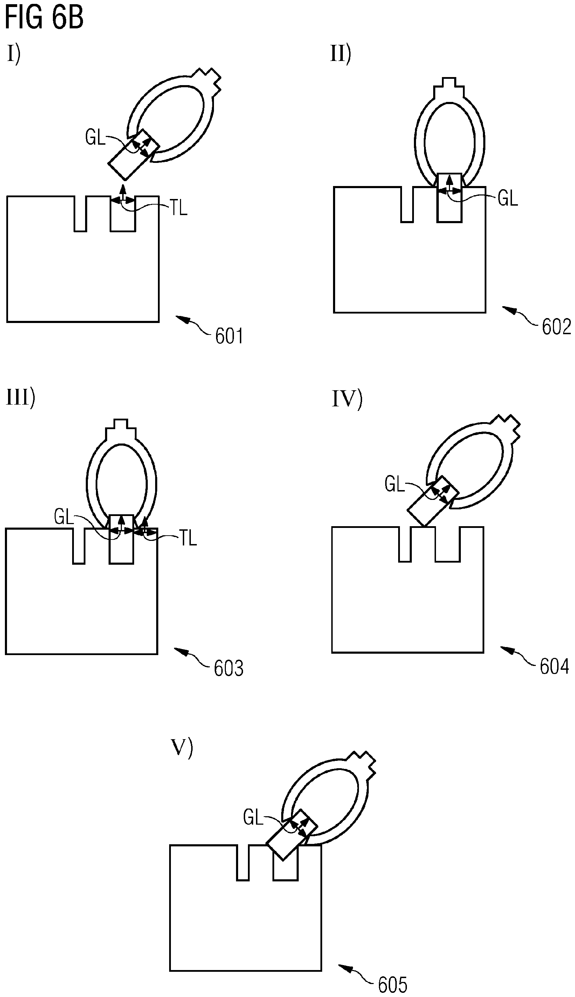

Figure 6 illustrates schematic drawings of exemplary insertion scenarios for a PCB component held by a robot's gripper in accordance with disclosed embodiments.

Assume that each PCB motherboard has five holes H1... H5 and the insertion task consists in inserting five component or entities E1,.., E5 into a corresponding board hole H1,..., H5. In Figure 6, the gripper RG holding the component E and the PCB board MB are shown, whilst, , for sake of simplicity, the robot and the FT-sensor are not shown.

As shown in Figure 6A, the robotic gripper RG of a gripper model of a specific robot of a specific model (not shown) holds a PCB entity component E to be inserted into the hole H of the motherboard MB. In view 600, two locations are shown, the gripper location GL and the target location TL. The gripper location GL is the TCPF location while the target location TL is the hole target location to be reached by the gripper location GL in the PCB component insertion task.

In embodiments, the FT-sensor predictor may be generated with the training dataset according to the specific use case in a given PCB shopfloor combination scenario. For example, the FT-sensor predictor of a given FT-sensor may be trained for a specific model of a robot, of a gripper, model of a PCB surface model and five specific components.

To generate the training dataset, the robotic program, generated for the pyshical robot, contains robotic instructions for taking component Ei, moving it closes to hole Hi, searching for the hole, and inserting the component Ei inside the hole Hi. This robotic program is used for generating the dataset for the specific FT-sensor predictor in the specific physical use case.

In embodiments, the robotic program which usually may contain simple "search and push" instructions may be modified with improvements for generating a richer training dataset. For example, the robotic program may be enriched to contain instructions to search around the hole and/or inside the hole in multiple angles and in multiple places, even when the robot finds the hole, it may continue until the end to learn the forces and torques measured by the physical FT sensor. For example, the robot senses around and inside each hole approximately 300 times and save the forces and torques measured by the FT sensor.

The following datasets are collected for training a FT predictor:
Input data: the relative angle TCPF, the relative distance TCPF, speed, index of Ei.
Output data: FT sensor's outcome 1-6 Forces of Fx, Fy, Fz, Tx, Ty, Tz

Assume the robot (not shown) holds a gripper RG and has to push the component E into the hole H of the mother board MB. To complete the insertion task, the gripper location GL has to reach the hole target location TL.

In Figure 6B, five exemplary views are shown to illustrate the advantages of embodiments in simulating the production impacts on actual PCB motherboards where the actual hole locations may slightly deviate from their nominal position.

In embodiments, the target location (TL) is a nominal location and it represents the intended position that the Tool Center Point Frame (TCPF) should reach, allowing for a tolerance of plus or minus delta variations due to typical deviations of the actual physical location of the real hole in a real motherboard. As known to those skilled in the art, inserting component E into hole H may sometimes require a straightforward 90-degree motion by the robot. In other instances, the robot may need to first insert at an angle to the right, then to the left, before finally moving straight.

In the first view 601, the robot's gripper moves and holds the component E to insert it into the hole H of the mother board MB, aiming to align the TCPF location GL with the target location TL.

In the second view 602, the TCPF location GL reaches its nominal target TL, where, in this case, the nominal target and the real actual target are identical.

In the third view 603, the gripper location GL reaches its real target which deviates from the nominal target by approximately 2 mm.

In the fourth view 604, the robot attempts to push the component E but it is stopped by the FT sensor detecting contact with the board surface. The relative angle between the TCPF and the board surface is 45 degrees. The relative distance between the TCPF and the relative distance between the TCPF and bioard surface is approximately 3 cm.

In the fifth view 605, the robot gain tries to push the component but it is stopped by the FT sensor. The relative angle between TCPF and the surface is 45 degrees. The relative distance between the TCPF and the surface is now reduced to approximately 2 cm.

In real PCB assembly lines, the real holes in each motherboard can deviate from their nominal positions, unlike the nominal holes of an ideal motherboard.

Assume a real PCB assembly scenario with approximately five types of motherboards type A,B,C,D,E, each motherboard type differing in the exact placement of the holes. Assume that in the line there are N motherboards of which 30% are of type A, 20% of type B, 5% of type C, 15% of type D and 30% of type E. Assume assembly engineers are aware of these five types of motherboards and aim to simulate the robot's insertion task. In embodiments, they can advantageously run a robotic simulation and apply the FT-sensor predictor with the above percentages for each of the five board types.

In embodiments, the following additional steps may be performed via a virtual system:
- loading multiple instances of the same surfaces, each with shifted holes and its corresponding percentage;
- loading the robot and gripper;
- using robotic simulation to simulate the exact physical behavior of the robot for each end-effector/component encounter.

Advantageously, with these embodiments, the industrial users can determine the real cycle time of the robotic task based on actual types of motherboards, rather than just an idealized nominal motherboard.

Additionally, they can verify users offline that the robot can perform tasks on all types of motherboards A-E.

Moreover, they can utilize various search methods for holes (e.g., grid search, circular or spiral Search, edge or Contour Search).

Additionally, they can use the virtual system to try different search methods and recommend the optimal search for each Ei-Hi based on real conditions.

Moreover, they can use the virtual system to suggest replacing the nominal Hi location in the robotic program with a more accurate Hi' based on real conditions.

All these benefits are achieved entirely in a virtual environment and not at the shopfloor.

Of course, those skilled in the art will recognize that, for simplicity and clarity, the full structure and operation of all data processing systems suitable for use with the present disclosure is not being illustrated or described herein. Instead, only so much of a data processing system as is unique to the present disclosure or necessary for an understanding of the present disclosure is illustrated and described. The remainder of the construction and operation of data processing system 100 may conform to any of the various current implementations and practices known in the art.

It is important to note that while the disclosure includes a description in the context of a fully functional system, those skilled in the art will appreciate that at least portions of the present disclosure are capable of being distributed in the form of instructions contained within a machine-usable, computer-usable, or computer-readable medium in any of a variety of forms, and that the present disclosure applies equally regardless of the particular type of instruction or signal bearing medium or storage medium utilized to actually carry out the distribution. Examples of machine usable/readable or computer usable/readable mediums include: nonvolatile, hard-coded type mediums such as read only memories (ROMs) or erasable, electrically programmable read only memories (EEPROMs), and user-recordable type mediums such as floppy disks, hard disk drives and compact disk read only memories (CD-ROMs) or digital versatile disks (DVDs).

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the description in the present application should be read as implying that any particular element, step, or function is an essential element which must be included in the claim scope: the scope of patented subject matter is defined only by the allowed claims.

## Claims

1. A method for simulating, by a data processing system, a motion of a robot inserting a board component into a hole of a PCB board while utilizing a Force Torque sensor, whereby the method comprises the following steps:
- receiving data (205) on a virtual representation of a robot's gripper, of a PCB component, of a PCB board, of a board hole and of a Force Torque sensor, hereafter FT-sensor;
- receiving data (210) on a robotic target insertion task about an insertion of the component held by the robot's gripper into the hole described by a nominal hole target location to be reached by the robotic gripper's location;
- simulating (215) the robotic component insertion whereby at least one real hole target location differs from the nominal hole target location; further including receiving input data on an encounter event between the component and the board surface; wherein said encounter event data comprise at least position and speed data between the component and the surface;
- applying (220) to the input data a FT-sensor predictor configured for generating as output data a set of predicted FT-sensor outcome data; wherein the FT-sensor predictor is a module trained by a Machine Learning algorithm with input training datasets comprising datasets of several encounter data between the component and the surface and with output training dataset comprising the corresponding real FT-sensor outcome data;
- based on the predicted FT-sensor outcome data, identifying (225) a condition requiring a corresponding adaptation of the robot's insertion motion;
- simulating (230) the robot's adapted insertion motion.

2. The method of claim 1, wherein the FT-sensor predictor is trained via a regression supervised learning algorithm.

3. The method of claim 1 or 2, wherein the adaptation of the robot's insertion motion is reflected in an adjusted robotic program for download.

4. The method of any of the previous claims, further comprising controlling a real robot according to the simulated insertion motion

5. The method of any of the previous claims, wherein the adaptation of the robot's insertion motion is selected from the group consisting of:
- adaptation of the speed of the robot;
- adaption of the motion type of the robot;
- stopping pushing the component;
- continuing pushing the component;
- changing type of robot's search e.g. grid, spiral, contour search.

6. The method of any of the previous claims, further comprising simulating robot's adapted insertion motion with different types of PCB boards having real hole locations deviating from the nominal hole locations.

7. A data processing system comprising:
a processor; and
an accessible memory, the data processing system particularly configured to:
- receive data on a virtual representation of a robot's gripper, of a PCB component, of a PCB board, of a board hole and of a Force Torque sensor, hereafter FT-sensor;
- receive data on a robotic target insertion task about an insertion of the component held by the robot's gripper into the hole described by a nominal hole target location to be reached by the robotic gripper's location;
- simulate the robotic component insertion whereby at least one real hole target location differs from the nominal hole target location; further including receiving input data on an encounter event between the component and the board surface; wherein said encounter event data comprise at least position and speed data between the component and the surface;
- apply to the input data a FT-sensor predictor configured for generating as output data a set of predicted FT-sensor outcome data; wherein the FT-sensor predictor is a module trained by a Machine Learning algorithm with input training datasets comprising datasets of several encounter data between the component and the surface and with output training dataset comprising the corresponding real FT-sensor outcome data;
- based on the predicted FT-sensor outcome data, identify a condition requiring a corresponding adaptation of the robot's insertion motion;
- simulate the robot's adapted insertion motion.

8. The data processing system of claim 7, wherein the adaptation of the robot's insertion motion is reflected in an adjusted robotic program for download.

9. The data processing system of claim 7 or 8, further configured to control a real robot according to the simulated insertion motion

10. The data processing system of any of the previous claims, wherein the adaptation of the robot's insertion motion is selected from the group consisting of:
- adaptation of the speed of the robot;
- adaption of the motion type of the robot;
- stopping pushing the component;
- continuing pushing the component;
- changing type of robot's search e.g. grid, spiral, contour search.

11. A non-transitory computer-readable medium encoded with executable instructions that, when executed, cause one or more data processing system to:
- receive data on a virtual representation of a robot's gripper, of a PCB component, of a PCB board, of a board hole and of a Force Torque sensor, hereafter FT-sensor;
- receive data on a robotic target insertion task about an insertion of the component held by the robot's gripper into the hole described by a nominal hole target location to be reached by the robotic gripper's location;
- simulate the robotic component insertion whereby at least one real hole target location differs from the nominal hole target location; further including receiving input data on an encounter event between the component and the board surface; wherein said encounter event data comprise at least position and speed data between the component and the surface;
- apply to the input data a FT-sensor predictor configured for generating as output data a set of predicted FT-sensor outcome data; wherein the FT-sensor predictor is a module trained by a Machine Learning algorithm with input training datasets comprising datasets of several encounter data between the component and the surface and with output training dataset comprising the corresponding real FT-sensor outcome data;
- based on the predicted FT-sensor outcome data, identify a condition requiring a corresponding adaptation of the robot's insertion motion;
- simulate the robot's adapted insertion motion.

12. The non-transitory computer-readable medium of claim 11, wherein the adaptation of the robot's insertion motion is reflected in an adjusted robotic program for download.

13. The non-transitory computer-readable medium of claim 11 or 12, further encoded with executable instructions that, when executed, cause one or more data processing system to control a real robot according to the simulated insertion motion

14. The non-transitory computer-readable medium of any of the previous claims, wherein the adaptation of the robot's insertion motion is selected from the group consisting of:
- adaptation of the speed of the robot;
- adaption of the motion type of the robot;
- stopping pushing the component;
- continuing pushing the component;
- changing type of robot's search e.g. grid, spiral, contour search.
